# EUROPÄISCHE PATENTSCHRIFT

(11) **EP 1 731 338 B1**
(45) Veröffentlichungstag und Bekanntmachung des Hinweises auf die Patenterteilung: **29.12.2010**
(21) Anmeldenummer: 06007528.0
(22) Anmeldetag: 10.04.2006
(51) Int. Cl.: B60H 1/03, B60H 1/00, B60H 1/32

(54) **Temperiersystem für ein Fahrzeug**
System for controlling the temperature within a vehicle
Système pour tempérer l'intérieur d'un véhicule

(30) Priorität: 08.06.2005 DE 102005026443
(43) Veröffentlichungstag der Anmeldung: 13.12.2006
(73) Patentinhaber: J. Eberspächer GmbH & Co. KG, 73730 Esslingen (DE)
(72) Erfinder: Collmer, Andreas, 73773 Aichwald (DE); Eberspach, Günter, 72649 Wolfschlugen (DE)
(74) Vertreter: Ruttensperger, Bernhard

(56) Entgegenhaltungen:
- EP-A- 1 344 666
- EP-A- 1 527 914
- US-A1- 2002 153 132

## Beschreibung

Die vorliegende Erfindung betrifft ein Temperiersystem für ein Fahrzeug, umfassend ein Luftfördergebläse zum Fördern von in einen Fahrzeuginnenraum einzuleitender Luft, stromabwärts des Luftfördergebläses eine Verdampferanordnung einer Klimatisierungsanlage und stromabwärts der Verdampferanordnung einen wahlweise umströmbaren Wärmetauscher eines Kühlmittelkfeislauft eines Antriebsaggregats für ein Fahrzeug.

Bei derartigen Temperiersystemen besteht grundsätzlich das Problem, dass im Betrieb der Klimatisierungsanlage im Bereich der Verdampferanordnung Wasser kondensiert. Da zur Vergrößerung der thermisch wirksamen Oberfläche diese Verdampferanordnung häufig wabenartig ausgestaltet ist bzw. eine wabenartige Wärmeübertragungsstruktur aufweist, wird beim Kühlen der in den Fahrzeuginnenraum einzuleitenden Luft sich niederschlagende Feuchtigkeit vor allem auch im Bereich der Öffnungen einer derartigen wabenartigen Struktur angesammelt. Dies kann zur Keimbildung führen, was insbesondere auf Grund der damit einhergehenden Geruchsentwicklung unerwünscht ist.

Die DE 41 02 485 beschreibt ein Betriebsverfahren für einen Kältemittel-Verdampfer einer Fahrzeugklimaanlage. Um das Übersättigen des Verdampfers mit Feuchtigkeit vor allem bei tiefen Umgebungstemperaturen verhindern zu können, ist an dem Verdampfer ein Heizelement angeordnet. Dieses kann elektrisch betrieben werden oder von einem Wärmeträger durchströmt werden.

Die EP 1 527 914 A2 offenbart als nächster Stand der Technik ein Temperiersystem für ein Fahrzeug, bei welchem in einem Luftführungskanal stromabwärts eines Luftfördergebläses eine Verdampferanordnung einer Klimatisierungsanlage angeordnet ist. Dieser Verdampferanordnung ist eine elektrisch erregbare Heizeinrichtung zugeordnet, um im Bereich der Verdampferanordnung sich ansammelnde Feuchtigkeit durch Erregen der elektrisch erregbaren Heizeinrichtung zu verdampfen und aus dem Bereich der Verdampferanordnung weg zu transportieren. Stromabwärts dieser mit einer elektrisch erregbaren Heizeinrichtung kombinieten Verdampferanordnung ist ein Wärmetauscher eines Kühlmittelkreislaufs einer Brennkraftmaschine angeordnet, welcher von dem durch die Verdampferanordnung hindurchgeströmten Luftstrom umströmt wird.

Die US 2002/0153132 A1 offenbart ein Luftbehandlungssystem für Kraftfahrzeuge, bei welchem stromabwärts des Verdampfers einer Klimaanlage eine nicht mit dem Verdampfer in Kontakt stehende, elektrisch erregbare Heizeinrichtung angeordnet ist. Die elektrisch erregbare Heizeinrichtung ist in eine Mehrzahl getrennter Heizbereiche unterteilt und kann die durch den Verdampfer hindurchgeströmte Luft bei elektrischer Erregung erwärmen. Die so erwärmte Luft kann dann über eine Mehrzahl von durch Klappen wahlweise freigebbaren bzw. absperrbaren Auslassöffnungen in den Fahrzeuginnenraum geleitet werden.

Die EP 1 344 666 A2 offenbart ein Luftheizgerät, bei welchem in einem Gehäuse ein brennstoffbetriebenes Heizgerät mit einer Vielzahl von durch die zu erwärmende Luft umströmbaren Wärmeübertragungsrippen vorgesehen ist. Das Heizgerät erstreckt sich grundsätzlich quer zur Luftströmungsrichtung, wohingegen die Wärmeübertragungsrippen in Luftströmungsrichtung ausgerichtet sind. Stromabwärts des brennstoffbetriebenen Heizgeräts ist in dem Gehäuse ein Gebläse angeordnet, welches die Luft, die das Heizgerät umströmt hat, in Richtung Fahrzeuginnenraum leitet. Auch eine Klimaeinheit eines Kraftfahrzeugs kann stromabwärts des brennstroffbetriebenen Heizgeräts in dem Gehäuse vorgesehen sein.

Es ist die Aufgabe der vorliegenden Erfindung, ein Temperiersystem für ein Fahrzeug vorzusehen, das bei großer Funktionsvielfältigkeit und einfachem Aufbau in effizienter Weise zum Trocknen einer Verdampferanordnung betreibbar ist.

Erfindungsgemäß wird diese Aufgabe gelöst durch ein Temperiersystem für ein Fahrzeug gemäß Anspruch 1. Dieses umfasst ein Luftfördergebläse zum Fördern von in einen Fahrzeuginnenraum einzuleitender Luft, stromabwärts des Luftfördergebläses eine Verdampferanordnung einer Klimatisierungsanlage, stromabwärts der Verdampferanordnung einen wahlweise umströmbaren Wärmetauscher eines Kühlmittelkreislaufs eines Antriebsaggregats für ein Fahrzeug, wobei die Verdampferanordnung in Wärmeübertragungsverbindung mit einer dieser zugeordneten und an einer stromabwärtigen Seite derselben angeordneten, brennstoffbetriebenen Heizeinrichtung steht.

Bei dem erfindungsgemäßen Temperiersystem besteht zwischen der Heizeinrichtung einerseits und der Verdampferanordnung andererseits ein Wärmeübertragungskontakt, so dass zum Trocknen der Verdampferanordnung die im Bereich der Heizeinrichtung bereitgestellte Wärme effizient übertragen werden kann, vor allem ohne dem Erfordernis, die zu temperierende Luft als Wärmeübertragungsmedium nutzen zu können. Da weiterhin bei dem erfindungsgemäßen System die Heizeinrichtung auf der stromabwärtigen Seite der Verdampferanordnung positioniert ist, bleibt die für eine gute Wirksamkeit der Verdampferanordnung erforderliche freie Anströmbarkeit derselben praktisch unbeeinträchtigt.

Vor allem dann, wenn mit dem erfindungsgemäßen System eine Zusatzheizfunktion oder eine Standheizfunktion bereitgestellt werden soll, ist es vorteilhaft, wenn die Heizeinrichtung brennstoffbetrieben ist, da sie dann weitgehend ohne Belastung des Bordspannungssystems betrieben werden kann, auch wenn ein Antriebsaggregat nicht in Betrieb ist.

Eine sehr effiziente Wärmeübertragungsverbindung ist dadurch realisiert, dass die Heizeinrichtung in direktem Wärmeübertragungskontakt mit der Verdampferanordnung steht. Alternativ ist es möglich, dass die Heizeinrichtung über eine luftdurchlässige Zwischenlage in Wärmeübertragungskontakt mit der Verdampferanordnung steht. Hier hat sich besonders Metallvlies oder Metallgewebe oder derartiges Material als vorteilhaft für die Zwischenlage herausgestellt.

Vor allem dann, wenn bei dem erfindungsgemäßen System die Heizeinrichtung brennstoffbetrieben ist, kann vorgesehen sein, dass die Heizeinrichtung einen Wärmetauscherkörper mit daran vorgesehenen Wärmetauscherrippen umfasst und dass die Wärmetauscherrippen in Wärmeübertragungskontakt mit der Verdampferanordnung stehen.

Die vorliegende Erfindung wird nachfolgend mit Bezug auf die beiliegenden Zeichnungen detailliert beschrieben. Es zeigt:
- Fig. 1: eine schematische Darstellung eines Temperiersystems für ein Fahrzeug;
- Fig. 2: eine der Fig. 2 entsprechende Ansicht einer alternativen Ausge- staltungsform.

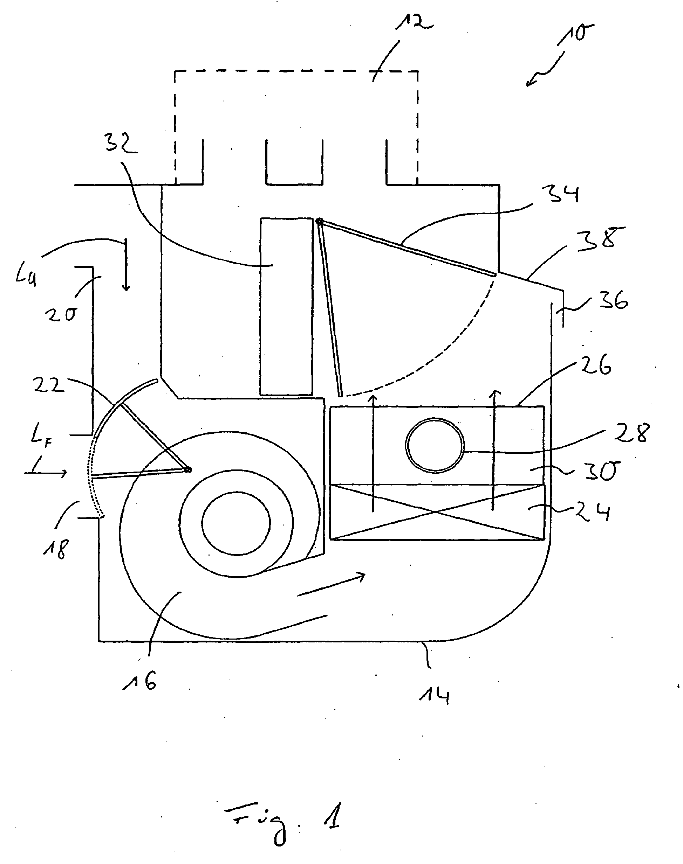

In der Fig. 1 ist ein Fahrzeugtemperiersystem allgemein mit 10 bezeichnet. Dieses dient dazu, Luft, die in einen schematisch angedeuteten Fahrzeuginnenraum 12 eingeleitet werden soll, entsprechend den klimatischen Anforderungen zu konditionieren. So kann diese Luft erwärmt, gekühlt bzw. getrocknet werden.

In einem Gehäuse 14 ist ein Luftfördergebläse 16 vorgesehen, das entweder über einen Frischluftkanal 18 heranströmende Frischluft L_{F} oder über einen Umluftkanal 20 aus dem Fahrzeuginnenraum 12 heranströmende Umluft L_{U} fördert. Um das Verhältnis von Frischluft L_{F} und L_{U} einstellen zu können, ist ein Einstellorgan 22 vorhanden, das jeweils einen der beiden Kanäle 18, 20 vollständig absperren kann oder diese gemäß dem gewünschten Mischungsverhältnis teilweise freigeben kann. Dieses Einstellorgan 22 kann manuell oder motorbetrieben verstellbar sein.

Die von dem Gebläse 16 vorangeförderte Luft strömt dann in Richtung auf eine Verdampferanordnung 24 einer Klimatisieranlage eines Fahrzeugs zu. Diese Verdampferanordnung 24 kann in ihrem umströmbaren Oberflächenbereich mit einer wabenartigen Struktur oder einer sonstigen mit großer Oberfläche ausgebildeten Struktur versehen sein, um eine sehr effiziente thermische Wechselwirkung zwischen der von dem Gebläse 16 abgegebenen Luft und der Verdampferanordnung 24 bereitzustellen. In der Verdampferanordnung 24 wird durch Verdampfen eines Kältemittels der diese umströmenden Luft Wärme entzogen, so dass im Klimatisierungsbetrieb diese Luft dann gekühlt in Richtung Fahrzeuginnenraum 12 weiterströmen kann. Gleichzeitig wird bedingt durch die thermodynamischen Rahmenverhältnisse beim Kühlen der Luft dieser auch Feuchtigkeit entzogen, so dass die gekühlt in den Fahrzeuginnenraum 12 weitergeleitete Luft auch getrocknet ist. Die der Luft dabei entzogene Feuchtigkeit wird sich zumindest teilweise im Bereich der Verdampferanordnung 24, beispielsweise der oberflächenvergrößerenden Außenstruktur derselben, ansammeln.

Unmittelbar stromabwärts der Verdampferanordnung 24 ist eine allgemein mit 26 bezeichnete Heizeinrichtung vorgesehen. Diese ist in dem dargestellten Beispiel brennstoffbetrieben und umfasst einen beispielsweise langgstreckten, näherungsweise zylindrischen Wärmetauscherkörper 28, der an seiner Innenseite von den heißen Verbrennungsabgasen durchströmt wird und dabei Wärme aufnimmt. Am Außenumfang des langgestreckten Wärmetauscherkörpers 28 sind mehrere Wärmeübertragungsrippen 30 vorgesehen, welche die Wärme von dem Wärmetauscherkörper 28 aufnehmen und über ihre Oberfläche abgeben. Dabei sind die Rippen 30 so orientiert, dass sie näherungsweise parallel zu dem die Verdampferanordnung 24 verlassenden Luftstrom liegen und somit dessen Strömung so wenig als möglich behindern. An einer Längsstirnseite sind die Rippen 30 in direktem Kontakt mit der Verdampferanordnung 24, so dass die über den Wärmetauscherkörper 28 auf die Rippen 30 übertragene Wärme zumindest zum Teil in die Verdampferanordnung 24 eingeleitet werden kann.

Weiter stromabwärts bezüglich der Heizeinrichtung 26 ist ein Wärmetauscher 32 vorgesehen, der von dem Kühlmittel eines Antriebsaggregats, beispielsweise einer Brennkraftmaschine, durchströmbar ist. Diesem Wärmetauscher 32 ist ein weiteres, klappenartiges Einstellorgan 34 zugeordnet, das zwischen seinen beiden dargestellten Endstellungen hin- und herverstellbar ist und somit den die Heizeinrichtung 26 verlassenden Luftstrom entweder vollständig über den Wärmetauscher 32 hinwegleiten kann oder vollständig am Wärmetauscher 32 vorbeileiten und somit den Wärmetauscher 32 umgehen kann oder einen Teil der Luft in Richtung zum Wärmetauscher 32 und einen verbleibenden Teil an diesem vorbeizuleiten. Auch dieses Einstellorgan 34 kann manuell oder motorbetrieben verstellbar sein. Die Luft tritt dann über nicht dargestellte Regulierorgane an verschiedenen Positionen in den Fahrzeuginnenraum 12 ein, um diesen gemäß den Vorgaben zu konditionieren

Soll bei dem in Fig. 1 dargestellten Temperiersystem 10 im Betrieb eines Fahrzeugs die Luft nur erwärmt werden, so kann dazu durch entsprechende Einstellung des Einstellorgans 34 die Luft über den Wärmetauscher 32 hinweggeleitet werden und somit dort Wärme aufnehmen. Weder die Verdampferanordnung 24 noch das Heizgerät 26 muss dazu betrieben werden. Soll beispielsweise bei hoher Luftfeuchtigkeit der erwärmt in den Fahrzeuginnenraum 12 einzuleitenden Luft auch Feuchtigkeit entzogen werden, so kann zusätzlich auch noch die Klimatisierungsanlage betrieben werden, so dass im Bereich der Verdampferanordnung 24 die Luft zunächst gekühlt und getrocknet wird, bevor sie dann bei entsprechender Einstellung des Einstellorgans 34 am Wärmetauscher 32 wieder Wärme aufnehmen kann und somit getrocknet, gleichwohl jedoch erwärmt in den Fahrzeuginnenraum 12 eingeleitet werden kann. Soll bei sehr hoher Außentemperatur der Luft keine Wärme zugeführt, sondern diese gekühlt werden, so ist es ausreichend, lediglich die Klimatisierungsanlage mit der Verdampferanordnung 24 zu betreiben und das Einstellorgan 34 so einzustellen, dass die in Richtung Fahrzeuginnenraum 12 strömende Luft dann nicht in Kontakt mit dem Wärmetauscher 32 kommt.

Um unter verschiedenen Temperaturbedingungen die Ansammlung von Flüssigkeit im Bereich des Gehäuses 14 durch Kondensation zu verhindern, ist weiterhin stromabwärts und über der Verdampferanordnung 24 bzw. der Heizeinrichtung 26 eine spaltartige und einen Kondensatablauf bereitstellende Öffnung 36 vorgesehen, wobei eine zu dieser Öffnung 36 führende Gehäusewandung 38 abfallend ist, um dort sich niederschlagende Flüssigkeit in Richtung zur Öffnung 36 zu leiten.

Weiterhin ist bei dem erfindungsgemäßen System eine Betriebsart möglich, bei welcher die Heizeinrichtung 26 durch Starten der Verbrennung betrieben wird um eine Standheizfunktion zu realisieren. In diesem Zustand nimmt also die vom Gebläse geförderte Luft durch Umströmen der Rippen 30 Wärme auf und wird somit erwärmt in den Fahrzeuginnenraum 12 eingeleitet. Diese Betriebsart ist auch möglich, wenn eine Zuheizerfunktion in der Anfangsphase des Fahrzeugbetriebs realisiert werden soll, in welcher durch das Antriebsaggregat und somit auch im Bereich des Wärmetauschers 32 nicht ausreichend Wärme bereitgestellt werden kann, um die in den Fahrzeuginnenraum 12 einzuleitende Luft ausreichend zu erwärmen.

Eine wesentliche zusätzliche Funktionalität des erfindungsgemäßen Temperiersystems liegt aber auch darin, dass beispielsweise in Außerbetriebsphasen die Heizeinrichtung 26 betrieben wird, um durch lokale Erwärmung derselben über die Rippen 30 die Verdampferanordnung 24 zu erwärmen und dort angesammelte Flüssigkeit zu verdampfen. Hierzu kann beispielsweise vorgesehen sein, dass durch gleichzeitiges Betreiben des Gebläses 16 die im Bereich der Verdampferanordnung 24 dann wieder abdampfende Flüssigkeit durch einen Luftstrom weggefördert und dann zur Außenumgebung hin abgegeben wird, also nicht in den Fahrzeuginnenraum 12 eingeleitet wird

Durch die unmittelbare Kontaktierung der Heizeinrichtung 26 bzw. der Rippen 30 derselben, mit der Verdampferanordnung 24 kann die in der Heizeinrichtung 26 bereitgestellte Wärme sehr effizient dazu genutzt werden, im Bereich der Verdampferanordnung 24 Feuchtigkeit auszutreiben. Gleichwohl ist durch die in Strömungsrichtung gestaffelte Anordnung von Verdampferanordnung 24 und Heizeinrichtung 26 dafür gesorgt, dass beispielsweise wiederum in der Anfangsphase des Betriebs eines Fahrzeugs durch gleichzeitiges Betreiben dieser beiden Baugruppen Luft einerseits entfeuchtet, andererseits aber erwärmt werden kann, um das Anlaufen der Innenseiten der Fahrzeugscheiben zu verhindern.

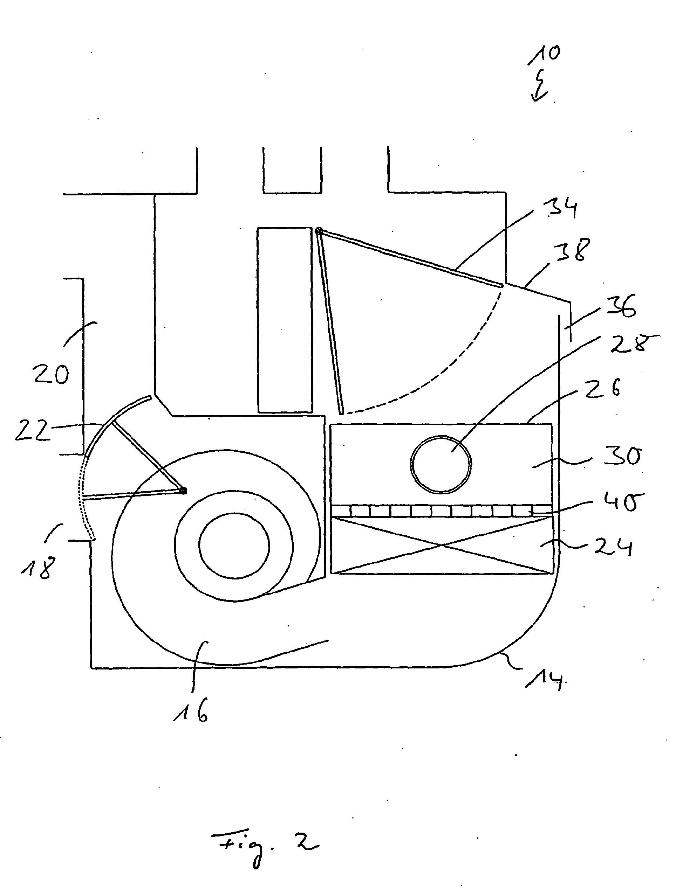

Eine alternative Ausgestaltungsform ist in Fig. 2 gezeigt. Man erkennt hier, dass zwischen der Verdampferanordnung 24 und der Heizeinrichtung 26, also beispielsweise wiederum den Rippen 30 derselben, eine von der zu konditionieren Luft durchströmbare Zwischenlage 40 vorgesehen ist. Diese kann beispielsweise ein Metallvlies oder Metallgeflecht umfassen, also grundsätzlich aus gut Wärme leitendem Material aufgebaut sein. Diese Zwischenlage 40 ist einerseits an die Außenseite der Verdampferanordnung 24 fest angebunden, ist andererseits aber auch an die Heizeinrichtung 26, also beispielsweise die Stirnränder der Rippen 30, angebunden bzw. in Kontakt damit. Das Bereitstellen dieser Zwischenlage 40 vermeidet bei gleichwohl hergestelltem Wärmeleitungskontakt eine direkte Berührung zwischen der Heizeinrichtung 26 und der Verdampferanordnung 24 und führt somit eine gewisse Elastizität in das Gesamtsystem ein.

Selbstverständlich ist es möglich, bei dem erfindungsgemäßen Temperiersystem 10 Variationen vorzunehmen. Bei dem erfindungsgemäßen Temperiersystem werden durch die direkte Wärmeübertragungsverbindung zwischen der Verdampferanordnung und der Heizeinrichtung verschiedene deutliche Betriebsvorteile erreicht. So wirkt die Verdampferanordnung als Strömungsgleichrichter für die Heizeinrichtung, so dass diese gleichermäßiger ansgeströmt wird und somit eine gleichmäßige Erwärmung der Luft erfolgen kann. Weiterhin vergrößert der direkte Wärmeübertragungskontakt zwischen diesen beiden Baugruppen die zur Wärmeübertragung von der Heizeinrichtung auf die Luft bereitstehende Oberfläche, da auch die Verdampferanordnung Wärme aufnimmt und diese selbstverständlich an die vorbeiströmende Luft abgibt. Dies hat zur Folge, dass die Heizeinrichtung bzw. deren Wärmeübertragungsoberfläche kleiner dimensioniert werden können. Ein weiterer Vorteil ist, dass einer Verdampfervereisung entgegengewirkt werden kann, da durch den direkten Wärmeübertragungskontakt bei Betreiben der Heizeinrichtung selbstverständlich auch die Verdampferanordnung Wärme aufnehmen kann.

## Patentansprüche

1. Temperiersystem für ein Fahrzeug, umfassend:
- ein Luftfördergebläse (16) zum Fördern von in einen Fahrzeuginnenraum (12) einzuleitender Luft,
- stromabwärts des Luftfördergebläses (16) eine Verdampferanordnung (24) einer Klimatisierungsanlage,
- stromabwärts der Verdampferanordnung (24) einen wahlweise umströmbaren Wärmetauscher (32) eines Kühlmittelkreislaufs eines Antriebsaggregats für ein Fahrzeug,
wobei die Verdampferanordnung (24) in Wärmeübertragungsverbindung mit einer dieser zugeordneten Heizeinrichtung (26) steht, wobei
die Heizeinrichtung (26) in direktem Wärmeübertragungskontakt oder
über eine luftdurchlässige Zwischenlage (40) in Wärmeübertragungskontakt mit der Verdampferanordnung (24) steht,
**dadurch gekennzeichnet dass** :
- die Heizeinrichtung (26) brennstoffbetrieben ist und
- die brennstoffbetriebene Heizeinrichtung (26) an einer stromabwärtigen Seite der Verdampferanordnung (24) angeordnet ist.

2. Temperiersystem nach Anspruch 1,
**dadurch gekennzeichnet, dass** die Zwischenlage (40) Metallvlies oder Metallgewebe umfasst.

3. Temperiersystem nach einem der Ansprüche 1 oder 2,
**dadurch gekennzeichnet, dass** die Heizeinrichtung (26) einen Wärmetauscherkörper (28) mit daran vorgesehenen Wärmetauscherrippen (30) umfasst und dass die Wärmetauscherrippen (30) in Wärmeübertragungskontakt mit der Verdampferanordnung (24) stehen.

## Claims

1. Temperature control system for a vehicle, comprising:
- an air supply blower (16) for supplying air to be inserted into a vehicle interior (12),
- an evaporator arrangement (24) of an air conditioning system downstream of the air supply blower (16),
- a heat exchanger (32) of a coolant circuit of a drive unit for a vehicle, around which air may flow if desired, downstream of the evaporator arrangement (24),
the evaporator arrangement (24) being in heat transfer communication with an associated heating device (26), the heating device (26) being in direct heat transfer contact or in heat transfer contact via an air-permeable intermediate layer (40) with the evaporator arrangement (24), **characterized in**:
- the heating device (26) being fuel-operated, and
- the fuel-operated heating device (26) being arranged at a downstream side of the evaporator arrangement (24).

2. Temperature control system in accordance with claim 1, **characterized in** the intermediate layer (40) comprising a metal fleece or a metal gauze.

3. Temperature control system in accordance with one of claims 1 or 2, **characterized in** the heating device (26) comprising a heat exchanger body (28) with heat exchanger ribs (30) provided thereon and in the heat exchanger ribs (30) being in heat transfer contact with the evaporator arrangement (24).

## Revendications

1. Système de contrôle de la température pour un véhicule, comprenant:
- une soufflerie (16) pour faire avancer de l'air à insérer dans l'intérieur d'un véhicule (12),
- un arrangement d'évaporateur (24) d'une climatisation en aval de la soufflerie d'air (16),
- un échangeur de chaleur (32) d'un circuit de réfrigérant d'un agrégat moteur d'un véhicule, autour duquel l'air peut circuler au choix, en aval de l'arrangement d'évaporateur (24),
l'arrangement d'évaporateur (24) étant en communication de transfert de chaleur avec un dispositif de chauffage (26) associé,
le dispositif de chauffage (26) étant en contact de transfert de chaleur direct ou en contact de transfert de chaleur par une couche poreuse intermédiaire (40) avec l'arrangement d'évaporateur (24),
**caractérisé en**:
- le dispositif de chauffage (26) étant opéré sur base de combustible, et
- le dispositif de chauffage opéré sur base de combustible (26) étant arrangé côté aval de l'arrangement d'évaporateur (24).

2. Système de contrôle de la température pour un véhicule selon la revendication 1,
**caractérisé par** la couche intermédiaire (40) comprenant un non-tissé de métal ou un tissé de métal.

3. Système de contrôle de la température pour un véhicule selon une des revendications 1 ou 2,
**caractérisé par** le dispositif de chauffage (26) comprenant un corps d'échangeur de chaleur (28) avec des renforts d'échangeur de chaleur (30) prévus là-dessus, et par les renforts d'échangeur de chaleur (30) étant en contact de transfert de chaleur avec l'arrangement d'évaporateur (24).
